# EUROPÄISCHE PATENTSCHRIFT

(11) **EP 1 691 183 B1**
(45) Veröffentlichungstag und Bekanntmachung des Hinweises auf die Patenterteilung: **16.07.2008**
(21) Anmeldenummer: 06002615.0
(22) Anmeldetag: 09.02.2006
(51) Int. Cl.: G01N 1/04

(54) **Vorrichtung und Verfahren zur Probennahme für die Oberflächenanalyse**
Method and device for taking a sample for surface analysis
Dispositif et procédé destinés à la prise d'échantillon pour l'analyse de surface

(30) Priorität: 15.02.2005 DE 102005007883
(43) Veröffentlichungstag der Anmeldung: 16.08.2006
(73) Patentinhaber: Innovent e.V. Technologieentwicklung, 07745 Jena (DE)
(72) Erfinder: Pawlik, Katrin, Dr., 07743 Jena (DE); Heggemann, Susanne, 07745 Jena (DE); Richter, Thomas, 07743 Jena (DE)
(74) Vertreter: Bock, Gerhard

(56) Entgegenhaltungen:
- EP-A- 0 819 929
- AU-A- 4 443 885
- GB-A- 2 280 133

## Beschreibung

Die Erfindung betrifft die Verwendung einer Vorrichtung und ein Verfahren zur Probennahme für die Oberflächenanalyse, insbesondere für die Analyse von oberflächennahen Bereichen von Polymerproben.

Massenkunststoffe mit ihren vielfältigen Einsatzmöglichkeiten lassen sich oft erst nach einer Oberflächenbehandlung lackieren, kleben oder bedrucken. Die Ursache für dieses Verhalten kann einerseits in der Chemie des Grundpolymers selbst liegen, wie z. B. bei Polyolefinen, die aufgrund ihres unpolaren Charakters eine geringe Oberflächenenergie und sehr schlechte Adhäsionseigenschaften besitzen. Andererseits können Verarbeitungshilfsmittel, z. B. Trenn- oder Gleitmittel, auf der Oberfläche von Kunststoffteilen die Qualität des Lackier-, Füge- oder Druckergebnisses außerordentlich negativ beeinflussen.

Während die mechanische Vorbehandlung die Oberfläche nur in ihrer Struktur und nicht in ihrer chemischen Zusammensetzung beeinflusst, wird durch die physikalischen und chemischen Behandlungsverfahren die Oberflächenchemie verändert. Da die Schichttiefe dieser Veränderungen außerordentlich gering ist, ist der Nachweis derselben extrem schwierig und oft auch sehr kostenaufwendig. Hinzu kommt, dass es praktisch kein praktikables und technisch angewandtes Verfahren gibt, Proben aus den obersten Polymerschichten mit einer Schichttiefe < 1 µm zu entnehmen.

Die klassischen Methoden der Oberflächenanalyse sind Elektronenstrahl- und andere spektroskopische Untersuchungen, die eine zumindest bestimmte Teilbereiche der Oberfläche im Millimeterbereich oder größer zerstörende vorherige Probennahme durch Herausschneiden oder Ausstanzen der Probe erfordern.

EP 0 819 929 A1 offenbart eine Vorrichtung zur Probennahme für die Spektralanalyse umfassend einen Entnahmekörper mit einer Oberfläche, die zumindest teilweise als Abrasionsbereich in Form einer abrasiven Beschichtung ausgebildet ist.

AU 44438 85 A offenbart einen zylindrischen Schleifkörper mit abgerundeten Enden, der mit einem Stück Abrasionsmaterial belegt ist.

GB 2 280 133 A offenbart eine Vorrichtung für die Probennahme für die Spektroskopie mittels Sandpapier.

Der Nachteil der Verwendung dieser drei Vorrichtungen ist, dass sie nicht unter extremen Bedingungen (hohe Temperaturen, Hoch-Vakuum, aggressive Chemikalien) zur Oberflächenanalyse einsetzbar sind

Aufgabe der Erfindung ist es, diesen Nachteil des Standes der Technik zu überwinden, insbesondere eine Vorrichtung und ein Verfahren zur zerstörungsarmen und aufwandgeringen Entnahme von Proben für die Oberflächenanalyse anzugeben, die eine schnelle, sichere und reproduzierbare Probennahme aus Oberflächen mit einer Schichttiefe im Mikrometerbereich und kleiner für die anschließende Charakterisierung / Analyse von modifizierten und/oder kontaminierten Oberflächen preiswert ermöglichen.

Das Wesen der Erfindung besteht darin, dass ein Entnahmekörper mit mikroabrasiver Oberfläche zur Entnahme von geringen und reproduzierbaren Probenmengen für die qualitative und vor allem für die quantitative Oberflächenanalyse, insbesondere von Polymerproben, wie bspw. Kunststoffoberflächen, bereit gestellt wird, vermittels dessen durch Abtragen von Oberflächenbestandteilen im definierten Mikrobereich eine zerstörungsarme Probennahme ermöglicht wird.
Diese definierten Mikroproben, bspw. Polymerproben sind anschließend mittels Pyrolyse-Gaschromatographie-Massenspektrometrie gemäß dem Stand der Technik analysierbar.

Die Entnahme von definierten Mikroproben 2 erfolgt durch einen Entnahmekörper 3, der eine strukturierte Oberfläche 31 besitzt. Diese Strukturierung wird durch in ihrer Ausgestaltung definierte Mikrokavitäten 11 innerhalb eines Abrasionsbereichs 1 in bzw. an dem Entnahmekörper 3 gebildet.

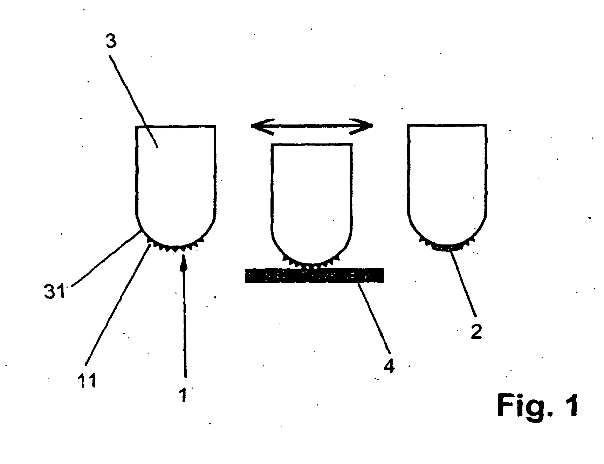

Dieser Entnahmekörper 3 wird beispielhaft an Hand der Figur 1 dargestellt, ohne ihn auf diese Ausführungsform zu beschränken.

Der Entnahmekörper 3 besteht bspw. aus Edelstahl, Silizium, Siliziumcabid, Siliziumnitrit, Korund, Borcarbid, nativem und synthetischen Rubin, Saphir oder Diamant.

Die Mikrokavitäten 11 des Abrasionsbereichs 1 sind durch Erhebungen oder Ausnehmungen, bspw. in Form von Rillen, Riefen, Krater oder andere Ausnehmungen definierter Geometrie ausgebildet, die in bestimmten, vorgebbaren Anordnungen und Abständen zueinander in der Oberfläche 31 des Entnahmekörpers 3 angeordnet sind. Diese Anordnung kann regelmäßig bzw. stochastisch sein.

Die Mikrokavitäten 11 besitzen eine Tiefe im Mikrometerbereich und kleiner, vorzugsweise eine Tiefe kleiner 3,5 µm.

Der Abrasionsbereich 1 ist bspw. durch Schleiftechniken, durch die Silizium-Ätztechnik, durch Prägetechniken oder durch die Oberflächenbehandlung mit Lasern gemäß dem Stand der Technik herstellbar.

Alternativ dazu kann der Abrasionsbereich 1 durch den Auftrag abrasiver Materialien und / oder Strukturen, wie bspw. Diamantierung, hergestellt werden.

Der Abrasionsbereichs 1 kann, je nach Anwendung, beschichtet oder unbeschichtet sein. Die Beschichtungen 12 sind bspw. Abscheidung von Hilfsreagenzien für die folgenden Analysemethoden.

Vermittels des Abrasionsbereichs 1 sind ausschließlich oberflächennahe Bereiche der Probe 4 mit einer Schichttiefe im Mikrometerbereich und kleiner für eine folgende Analyse abtragbar.

Dabei erfolgt der Abtrag durch eine Abrasion definierter Probenmengen bei einer definierten Tiefe der Oberflächenprobe durch eine vorgebbare Bewegung des Abrasionsbereichs 1 über die Oberfläche der Probe 4, bspw. lineare oder kreisende Bewegung, wobei die Mikroproben 2 in den Mikrokavitäten 11 gelagert werden.
Weiterhin sind durch den vorgebbaren Weg und/oder der vorgegebenen Fläche und/oder den vorgebbaren Anpressdruck des Abrasionsbereichs 1 auf die zu untersuchende Oberfläche der Probe 4 die Probenentnahmeparameter einstellbar.

Durch dieses erfindungsgemäße Verfahren ist eine definierte, reproduzierbare, qualitative und quantitative Abrasion an den zu untersuchenden Oberflächen mit einer Eindringtiefe im Mikrometerbereich und kleiner, vorzugsweise kleiner 3,5 µm, möglich.

Durch den erfindungsgemäßen Entnahmekörper 3 mit dem Abrasionsbereich 1 und das erfindungsgemäße Verfahren wird die Probennahme vollständig von der Analytik entkoppelt, wobei der anschließenden Analytik ausschließlich oberflächennahe und genau definierte Probenbereiche zugeführt werden.

Der erfindungsgemäße Gegenstand stellt ein robustes Probennahmesystem mit geringem apparativem Aufwand zur zerstörungsarmen Probennahme auf Oberflächen, insbesondere Polymeroberflächen dar.

Die nach dem Abtragen vermittels der mikroabrasive Oberfläche 31 des Entnahmekörpers 3 gewonnenen Oberflächenproben (Mikroproben 2) sind durch die Pyrolyse-Gaschromatographie-Massenspektrometrie effizient und preiswert analysierbar, so dass erfindungsgemäße Verfahren zur Probennahme im Zusammenhang mit der Pyrolyse-Gaschromatographie-Massenspektrometrie eine Alternative zu den bisher bekannten aufwendigeren und kostenintensiveren Oberflächenanalyseverfahren darstellt und gleichzeitig einen hohen Probendurchsatz ermöglicht.

Der erfindungsgemäße Entnahmekörper 3 und das erfindungsgemäße Verfahren eignen sich aber auch zur vorbereitenden Probennahme für andere Analysemethoden, wie bspw. der Gaschromatographie mit diversen Detektoren inklusive Massenspektrometer und in Kombination mit Headspace-, Thermodesorptions- und Pyrolyse-Technik, Flüssigchromatographie, allgemeiner Desorptionsanalytik, thermische Analyse, Oberflächenanalytik, wie bspw. XPS, Spektroskopieverfahren IR und UV/Vis, Massenspektrometer, Kernresonanzspektroskopie, PCR, chem. Sensorik, MALDI-TOF, AAS, ICP-OES, ICP-MS, nasschemische Analytik, Elementaranalyse oder TOC-Bestimmungen.

Die erfindungsgemäße Vorrichtung und das erfindungsgemäße Verfahren werden beispielhaft an Hand der folgenden Ausführungsbeispiele dargestellt, ohne sie auf diese zu beschränken.

### 1. Ausführungsbeispiel

### Entnahmekörper (Typ-Kalotte geschliffen) für die Pyrolyse-GC-MS-Messung bei Kunststoffen

Als Entnahmekörper 3 wird ein Zylinder aus Edelstahl mit 2 mm Durchmesser und 3 mm Länge an der Oberseite sphärisch konvex abgedreht und mittels einer Schleifvorrichtung im Kalottenschliff auf eine Rauhigkeit von RMS ≈ 1,5 µm aufgeraut, so dass ein Abrasionsbereich 1 mit Mikrokavitäten 11 ausgebildet wird. Kalottenschliff bedeutet dabei, dass die Mikrokavitäten 11 radial auf der sphärisch konvexen Fläche angeordnet sind.

Zur Entnahme einer Oberflächenprobe wird der Abrasionsbereich 1 des Entnahmekörpers 3 über eine definierte Strecke von 9,5 cm reibend über eine Polypropylenoberfläche geführt. Die Andruckkraft beträgt dabei ca. 7 N, was zu einem Probenabtrag von durchschnittlich 2,5 µg führt.

Die so gewonnene Mikroprobe 2 ist der Pyrolyse-GC-MS-Messung zuführbar, in dem der Entnahmekörper 3 in einen Pyrolysetiegel transferiert und bei 550°C in einem Ofenpyrolysator pyrolysiert wird. Bei dieser Temperatur wird das Polymer definiert zersetzt und die Bruchstücke und weitere organische Substanzen können auf einer Chromatographiesäule aufgetrennt und im Massenspektrometer detektiert werden, so dass ein Pyrolysechromatogramm der Mikroprobe 2 gewonnen wird.
Vor der eigentlichen Analyse der Mikroprobe 2 wird ein Blank, d.h. ein Pyrolysechromatogramm eines reinen Entnahmekörpers 3 (welcher keine organischen Substanzen trägt) aufgenommen, das quasi als Basislinie für die eigentliche Messung dient.
Die Pyrolysemessung eines reinen Entnahmekörpers 3 enthält keine organischen Substanzen.
Die oberflächennahe Probenaufnahme durch das Abreiben eines Polypropylenprobekörpers vermittels des Entnahmekörpers 3 hingegen zeigt, dass sehr wenig Polymermatrix entnommen wird, aber ein intensiver Weichmacherpeak detektierbar ist.

### 2. Ausführungsbeispiel

### Entnahmekörper (Typ-Querschliff) für die Pyrolyse-GC-MS-Messung

Als Entnahmekörper 3 wird ein Zylinder aus Edelstahl mit 2 mm Durchmesser und 3 mm Länge an der Oberseite sphärisch konvex abgedreht und mittels einer Schleifvorrichtung im Querschliff auf eine Rauhigkeit von RMS ≈ 1,5 µm aufgeraut, so dass ein Abrasionsbereich 1 mit Mikrokavitäten 11 ausgebildet wird. Querschliff bedeutet dabei, dass die Mikrokavitäten 11 quer zur Längsachse auf der sphärischen Fläche des Entnahmekörpers 3 verlaufen.

Zur Entnahme einer Mikroprobe 2 wird der Abrasionsbereich 1 des Entnahmekörpers 3 über eine definierte Strecke von 9,5 cm reibend über eine Polypropylenoberfläche geführt. Die Andruckkraft beträgt dabei ca. 7 N, was zu einem Probenabtrag von durchschnittlich 2,5 µg führt.

Die so gewonnene Mikroprobe 2 ist der Pyrolyse-GC-MS-Messung zuführbar, in dem der Entnahmekörper 3 in einen Pyrolysetiegel transferiert und bei 550°C in einem Ofenpyrolysator pyrolysiert wird. Bei dieser Temperatur wird das Polymer definiert zersetzt und die Bruchstücke und weitere organische Substanzen können auf einer Chromatographiesäule aufgetrennt und im Massenspektrometer detektiert werden, so dass ein Pyrolysechromatogramm der Mikroprobe 2 gewonnen wird.
Vor der eigentlichen Analyse der Mikroprobe 2 wird ein Blank, d.h. ein Pyrolysechromatogramm eines reinen Entnahmekörpers 3 (welcher keine organischen Substanzen trägt) aufgenommen, das quasi als Basislinie für die eigentliche Messung dient.
Die Pyrolysemessung eines reinen Entnahmekörpers 3 enthält keine organischen Substanzen.
Die oberflächennahe Probenaufnahme durch das Abreiben eines Polypropylenprobekörpers vermittels des Entnahmekörpers 3 hingegen zeigt, dass sehr wenig Polymermatrix entnommen wird, aber ein intensiver Weichmacherpeak detektierbar ist.

### 3. Ausführungsbeispiel

### Entnahmekörper (Typ-Kalotte geschliffen) für die Pyrolyse-GC-MS-Messung zum Nachweis von organischen Substanzen auf Aluminium

Als Entnahmekörper 3 wird ein Zylinder aus Edelstahl mit 2 mm Durchmesser und 3 mm Länge an der Oberseite sphärisch konvex abgedreht und mittels einer Schleifvorrichtung im Kalottenschliff auf eine Rauhigkeit von RMS ≈ 3 µm aufgeraut, so dass ein Abrasionsbereich 1 mit Mikrokavitäten 11 ausgebildet wird. Kalottenschliff bedeutet dabei, dass die Mikrokavitäten 11 radial auf der sphärisch konvexen Fläche angeordnet sind.

Zur Entnahme einer Oberflächenprobe wird der Abrasionsbereich 1 des Entnahmekörpers 3 über eine definierte Strecke von 20 cm reibend über eine mit Öl behandelte Aluminiumoberfläche geführt. Die Andruckkraft beträgt dabei ca. 15 N, was zu einem Probenabtrag von durchschnittlich 6,5 µg führt.

Die so gewonnene Mikroprobe 2 ist der Pyrolyse-GC-MS-Messung zuführbar, in dem der Entnahmekörper 3 in einen Pyrolysetiegel transferiert und bei 550°C in einem Ofenpyrolysator pyrolysiert wird.

Vor der eigentlichen Analyse der Mikroprobe 2 wird ein Blank, d.h. ein Pyrolysechromatogramm eines reinen Entnahmekörpers 3 (welcher keine organischen Substanzen trägt) aufgenommen, das quasi als Basislinie für die eigentliche Messung dient.
Die Pyrolysemessung eines reinen Abrasionskörpers 3 enthält keine organischen Substanzen.
Die oberflächennahe Probenaufnahme durch das Abreiben eines mit Öl behandelten Aluminiumkörpers vermittels des Entnahmekörpers 3 hingegen zeigt, dass der hochsiedende Kohlenwasserstoffanteil des verwendeten Öls detektiert wird.

### Bezugszeichenliste

- 1 -: Abrasionsbereich
- 11 -: Mikrokavitäten
- 12 -: Beschichtung
- 2 -: Mikroprobe
- 3 -: Entnahmekörper
- 31 -: Oberfläche
- 4 -: Probe

## Patentansprüche

1. Verwendung einer Vorrichtung umfassend einen Entnahmekörper (3) mit einer Oberfläche (31), die zumindest teilweise als Abrasionsbereich (1) ausgebildet ist, zur Probennahme von Mikroproben (2) aus einer Oberfläche für die Pyrolyse-Gaschromatographie-Massenspektrometrie.

2. Verwendung einer Vorrichtung gemäß Anspruch 1, **dadurch gekennzeichnet, dass** der Abrasionsbereich (1) aus Mikrokavitäten (11) besteht.

3. Verwendung einer Vorrichtung gemäß Anspruch 2, **dadurch gekennzeichnet, dass** die Mikrokavitäten (11) im oder an dem Entnahmekörper (3) angeordnet sind.

4. Verwendung einer Vorrichtung gemäß Anspruch 2, **dadurch gekennzeichnet, dass** die Mikrokavitäten (11) durch Ausnehmungen ausgebildet sind.

5. Verwendung einer Vorrichtung gemäß Anspruch 2, **dadurch gekennzeichnet, dass** die Mikrokavitäten (11) durch Erhebungen ausgebildet sind.

6. Verwendung einer Vorrichtung gemäß Anspruch 2, **dadurch gekennzeichnet, dass** die Mikrokavitäten (11) regelmäßig oder stochastisch angeordnet sind.

7. Verwendung einer Vorrichtung gemäß Anspruch 2, **dadurch gekennzeichnet, dass** die Mikrokavitäten (11) eine Tiefe im Mikrometerbereich und kleiner aufweisen.

8. Verwendung einer Vorrichtung gemäß Anspruch 7, **dadurch gekennzeichnet, dass** die Mikrokavitäten (11) eine Tiefe kleiner als 3,5 µm aufweisen.

9. Verfahren zur Analyse von Mikroproben (2) aus einer Oberfläche bei dem ein Abrasionskörper (3) mit einem Abrasionsbereich (1) durch eine vorgebbare Bewegung abrasierend über die Oberfläche einer Probe (4) bewegt wird, wobei die Mikroproben (2) in den Mikrokavitäten (11) gelagert werden und der Entnahmekörper (3) mit den Mikroproben (2) anschließend direkt der Pyrolyse-Gaschromatographie-Massenspektrometrie zugeführt wird.

10. Verfahren zur Analyse von Mikroproben (2) gemäß Anspruch 9, **dadurch gekennzeichnet, dass** die Bewegung linear oder kreisend erfolgt.

11. Verfahren zur Analyse von Mikroproben (2) gemäß Anspruch 9, **dadurch gekennzeichnet, dass** die Probenentnahmeparameter durch einen vorgebbaren Weg und/oder einer vorgegebenen Fläche und/oder einen vorgebbaren Anpressdruck des Abrasionsbereichs (1) auf die zu untersuchende Oberfläche der Probe (4) einstellbar sind.

## Claims

1. Use of a device for taking microsamples (2) from a surface for the pyrolysis gas chromatography-mass spectroscopy said device containing a sample taking unit (3) with a surface (31) that is at least partly designed as an abrasion segment (1).

2. Use of a device as set forth in claim 1, wherein the abrasion segment (1) consists of microactivities (11).

3. Use of a device as set forth in claim 2, wherein the microactivities (11) are arranged in or at the sample taking unit (3).

4. Use of a device as set forth in claim 2, wherein the microactivities (11) are formed by recesses.

5. Use of a device as set forth in claim 2, wherein the microactivities (11) are formed by projections.

6. Use of a device as set forth in claim 2, wherein the microactivities (11) are arranged regularly or stochastically.

7. Use of a device as set forth in claim 2, wherein the microactivities (11) have a depth in the micrometer range or smaller.

8. Use of a device as set forth in claim 7, wherein the microactivities (11) have a depth less than 3.5 µm.

9. Method for analysing microsamples (2) from a surface in which an abrasion unit (3) provided with an abrasion segment (1) is abrasively moved over a surface of a sample (4) according to a definable motion and said microsamples (2) are deposited in the microactivities (11) and afterwards the sample taking unit (3) containing the microsamples (2) is directly supplied to the pyrolysis gas chromatography-mass spectrometry.

10. Method for analysing microsamples (2) as set forth in claim 9, wherein the motion can be linear or rotational.

11. Method for analysing microsamples (2) as set forth in claim 9, wherein the sample taking parameters can be adjusted by a definable track and/or a definable area and/or a definable contact pressure of the abrasion segment (1) to the surface of the sample (4) to be examined.

## Revendications

1. Application d'un dispositif comprenant un corps de prise (3) dont la surface (31) est formée, au moins en partie, comme zone à effet abrasif (1), destiné à prélever d'une surface des microéchantillons (2) pour effectuer une pyrolyse avec chromatographie en phase gazeuse et spectrométrie de masse.

2. L'application d'un dispositif conforme à la revendication 1 est **caractérisée en ce que** la zone à effet abrasif (1) est composée de microcavités (11).

3. L'application d'un dispositif conforme à la revendication 2 est **caractérisée en ce que** les microcavités (11) sont disposés dans ou sur le corps de prise d'échantillon (3).

4. L'application d'un dispositif conforme à la revendication 2 est **caractérisée en ce que** les microcavités (11) sont formées par des entailles.

5. L'application d'un dispositif conforme à la revendication 2 est **caractérisée en ce que** les microcavités (11) sont formées par des élévations.

6. L'application d'un dispositif conforme à la revendication 2 est **caractérisée en ce que** les microcavités (11) sont disposes soit de manière régulière soit de manière stochastique.

7. L'application d'un dispositif conforme à la revendication 2 est **caractérisée en ce que** la profondeur des microcavités (11) est de l'ordre du micromètre ou même de l'ordre inférieur .au micromètre.

8. L'application d'un dispositif conforme à la revendication 7 est **caractérisée en ce que** la profondeur des microcavités (11) est inférieure à 3,5 µm.

9. Procédé destiné à l'analyse de microéchantillons (2) prélevés par l'abrasion d'une surface au moyen de la zone à effet abrasif (1) d'un corps abrasif (3) effectuant un mouvement prédéterminé sur la surface d'un échantillon (4) ; les microéchantillons prélevés (2) étant déposés dans les microcavités (11) d'où le corps de prise (3) puisse les amener directement à la pyrolyse avec chromatographie en phase gazeuse et spectrométrie de masse.

10. Procédé destiné à l'analyse de microéchantillons (2) suivant la revendication 9 est **caractérisé en ce que** le mouvement prédéterminé peut être effectué de manière linéaire ou circulaire.

11. Procédé destiné à l'analyse de microéchantillons (2) suivant la revendication 9 est **caractérisé en ce qu'**il est possible de prérégler en fonction de la surface de l'échantillon à analyser, tous les paramètres indispensables pour effectuer la prise de l'échantillon en définissant au préalable les déplacements et/ou la surface et/ou la pression de la zone à effet abrasif (1) contre la surface à analyser de l'échantillon (4).
